# EUROPÄISCHE PATENTSCHRIFT

(11) **EP 0 922 394 B1**
(45) Veröffentlichungstag und Bekanntmachung des Hinweises auf die Patenterteilung: **21.02.2007**
(21) Anmeldenummer: 98120164.3
(22) Anmeldetag: 28.10.1998
(51) Int. Cl.: A23L 1/0524, A23L 1/09

(54) **Geliermittelmischung und Verfahren zu deren Herstellung**
Gelling agent composition and process for its preparation
Composition contenant un agent de gélification et son procédé de préparation

(30) Priorität: 11.11.1997 DE 19749820
(43) Veröffentlichungstag der Anmeldung: 16.06.1999
(73) Patentinhaber: Südzucker Aktiengesellschaft Mannheim/Ochsenfurt, 68165 Mannheim (DE)
(72) Erfinder: Kunz, Markwart, Dr., 67550 Worms (DE); Rapp, Knut M., Dr., 67591 Offstein (DE)
(74) Vertreter: Schrell, Andreas

(56) Entgegenhaltungen:
- EP-A- 0 625 578
- WO-A-96/25050
- US-A- 3 865 957

## Beschreibung

Die vorliegende Erfindung betrifft ein Verfahren zur Herstellung einer Geliermittelmischung aus Pektin, einer Genußsäure und einem Disaccharidalkohol-Gemisch sowie die so hergestellte Geliermittelmischung.

Aus der DE 12 75 853 A1 ist ein Verfahren bekannt, gemäß dem Zuckerteilchen angefeuchtet werden und anschließend ein Gemisch aus miteinander feinververmahlenem Zucker und Pektin mit einer bestimmten Teilchengröße aufgebracht wird. Dies geschieht, um das Pektin beschleunigt bei der Herstellung von Konfitüren in Lösung zu bringen. Dieses Geliermittelherstellverfahren ist allerdings sehr aufwendig.

Gemäß der DE 18 00 141 A1 wird mit Wasser ein Trokkenpektinprodukt so hergestellt, daß es mit Zucker agglomeriert werden kann. Dies geschieht, um ein leicht wasserlösliches, rieselfähiges und hochkonzentriertes Trockenpektinprodukt bereitzustellen.

Gemäß der DE 44 24 866 A1 wird ein Gelierhilfsmittel hergestellt, indem körnige Zuckerteilchen mit feinvermahlenem Pektin sowie anderen Komponenten überzogen werden. Als Hilfsmittel wird dabei 0,05 bis 0,5 % eines neutralen Pflanzenöls verwendet.

Ziel des Verfahrens ist es, die Herstellung eines qualitativ dem Handelsprodukt entsprechenden, aber entmischungsstabileren Produktes zu ermöglichen.

In der DE 33 29 071 A1 wird beschrieben, wie wasserfreie Citronensäure mit einem Hilfsstoff, einem gehärteten pflanzlichen Fett mit einem Schmelzpunkt von 42 bis 44°C, versetzt wird.

Aus der US-PS 1,827,991 ist es bekannt, Süßungsmittel mit einem Hüllstoff zu überziehen.

Die EP O 089 939 A1 offenbart die Vermischung von Palatinit, Pektin und durch Fermentation entstandene Genußsäure zu einem Joghurtprodukt. Die EP 0 635 578 A1 und die US 3,865,957 beschreiben die Herstellung von zuckerfreier Erdbeerkonfitüre, wobei Pektin, Disaccharidalkohol-Gemisch und Genußsäure vermischt werden und eine gelierte Erdbeerkonfitüre erhalten wird.

Die vorgenannten Verfahren verbessern die Lagerfähigkeit von Gelierzucker im Hinblick auf die Gelierfähigkeit nicht hinreichend. Aus diesem Grund sind Polyethylenschicht-haltige Verbund-Verpackungen in der Regel notwendig. Zudem sind die vorgenannten Verfahren technisch aufwendig und bergen in vielen Fällen das Risiko in sich, daß das verwendete Öl ranzig werden kann. Außerdem ist die Pektin-Komponente bei Lagerung in Verbindung mit Feuchtigkeit einem autokatalytischen Abbau und einer daraus resultierenden Gelierkraft-Verminderung ausgesetzt.

Der vorliegenden Erfindung liegt daher das Problem zugrunde, ein Verfahren zur Herstellung einer Geliermittelmischung bereitzustellen, das die vorgenannten Nachteile überwindet, insbesondere zu einer entmischungsstabilen und leicht herzustellenden Geliermittelmischung führt.

Dieses Problem wird durch die Bereitstellung eines Verfahrens gemäß Hauptanspruch gelöst. Insbesondere wird das Problem gelöst durch die Bereitstellung eines Verfahrens zur Herstellung einer Geliermittelmischung aus Pektin, einer Genußsäure, ggf. einem Süßungsmittel und einem Disaccharidalkohol-Gemisch, wobei in einem ersten Verfahrensschritt das Pektin mit dem Disaccharidalkohol-Gemisch gemischt und in einem zweiten Verfahrensschritt die Genußsäure und ggf. das Süßungsmittel hinzugegeben wird. Pektin, Disaccharidalkohol-Gemisch, Genußsäure, ggf. vorhandene Süßungsmittel und Zusatzstoffe liegen in fester Form, also zum Beispiel feinkörnig, vermahlen oder pulverig vor.

Diese Verfahrensweise führt zu einem Produkt, das ein geschütztes Pektin mit zumindest teilweise dem Aufbau "Pektinkern-Disaccharidalkohol-Gemischschicht" aufweist.

In einer besonders bevorzugten Ausführungsform betrifft die Erfindung ein vorgenanntes Verfahren, wobei vor dem ersten Schritt, das heißt vor der Mischung des Pektins mit dem Disaccharidalkohol-Gemisch, das Pektin mit einem Hüllstoff, insbesondere einem amphiphilen und/oder hydrophoben Stoff, wie einem gehärteten Pflanzenfett, gemischt wird. Das Beschichten des, vorzugsweise vorgewärmten, Pektins mit dem, ebenfalls vorzugsweise vorgewärmten, Hüllstoff kann durch Besprühen geschehen. Es kann aber auch vorgesehen sein, pulverförmigen Hüllstoff z.B. mit einer Körngröße von 50 bis 350 µm zum Pektin zu geben, dies Gemisch bei Raumtemperatur zu mischen und dann dies Gemisch unter Mischen auf oder knapp über den Schmelzpunkt des Hüllstoffs aufzuheizen. Das erfindungsgemäß vorgesehene Mischen des Hüllstoffs mit dem Pektin am oder knapp über dem Schmelzpunkt des Hüllstoffs führt zu der erwünschten Hüllstoffschicht auf einem Pektinkern. Wesentlich ist beim Mischen, daß eine geeignete Temperatur, nämlich eine Temperatur bei der der Hüllstoff plastisch beziehungsweise flüssig ist, eingesetzt wird.

Diese Verfahrensweise führt zu einem Produkt, das ein geschütztes Pektin aufweist mit zumindest teilweise dem Aufbau "Pektinkern-Hüllstoffschicht-Disaccharidalkohol-Gemischschicht".

In einer weiteren bevorzugten Ausführungsform betrifft die Erfindung ein vorgenanntes Verfahren, wobei nach dem ersten Verfahrensschritt und vor dem zweiten Verfahrensschritt, das heißt nach dem Mischen des Pektins mit dem Disaccharidalkohol-Gemisch und vor dem Hinzugeben der Genußsäure, das Pektin und das diesem bereits zugegebene Disaccharidalkohol-Gemisch mit einem Hüllstoff, insbesondere einem amphiphilen oder hydrophoben Stoff, wie einem gehärteten Pflanzenfett, gemischt wird.

Das Beschichten des, vorzugsweise vorgewärmten, Pektins/Disaccharidalkohol-Gemisch mit dem, ebenfalls vorzugsweise vorgewärmten, Hüllstoff kann durch Besprühen geschehen. Es kann aber auch vorgesehen sein, pulverförmigen Hüllstoff z.B. mit einer Körngröße von 50 bis 350 µm zum Pektin/Disaccharidalkohol-Gemisch zu geben, diese Mischung bei Raumtemperatur zu mischen und dann diese Mischung unter Mischen auf oder knapp über den Schmelzpunkt des Hüllstoffs aufzuheizen. Das erfindungsgemäß vorgesehene Mischen des Hüllstoffs mit dem Pektin/Disaccharidalkohol-Gemisch am oder knapp über dem Schmelzpunkt des Hüllstoffs führt zu der erwünschten Hüllstoffschicht auf einem Pektinkern beziehungsweise Disaccharidalkohol-Gemischkern. Wesentlich ist beim Mischen, daß eine geeignete Temperatur, nämlich eine Temperatur bei der der Hüllstoff plastisch beziehungsweise flüssig ist, eingesetzt wird.

Diese Verfahrensweise führt zu einem Produkt, das ein geschütztes Pektin aufweist mit zumindest teilweise dem Aufbau "Pektinkern und Disaccharidalkohol-Gemischkern-Hüllstoffschicht" und/oder "Pektinkern-Disaccharidalkohol-Gemischschicht-Hüllstoffschicht".

Die Erfindung betrifft in einer weiteren Ausgestaltung ein vorgenanntes Verfahren, wobei das Disaccharidalkohol-Gemisch bei erhöhter Temperatur, insbesondere bei Temperaturen zwischen 30°C und 90°C, zu dem Pektin oder dem, vorzugsweise auf diese Temperatur erwärmten Pektin-Hüllstoff-Gemisch zugegeben, diese Mischung abgekühlt und danach gegebenenfalls die weiteren Substanzen wie Süßungsmittel oder Zusatzstoffe zugegeben werden.

In einer besonders bevorzugten Ausführungsform der Erfindung wird ein Disaccharidalkohol-Gemisch eingesetzt mit einem Wassergehalt, inclusive des Kristallwassers von 0 bis 10 Gew. -%, das 1-O-α-D-Glucopyranosyl-D-mannit (1,1-GPM) und 6-O-α-D-Glucopyranosyl-D-sorbit (1,6-GPS) enthält, wobei in besonders bevorzugter Ausführungsform die vorgenannten beiden Disaccharidalkohole in Mengenverhältnissen von 1:99 bis 99:1, vorzugsweise ca. 50:50 (Gew.-%), eingesetzt werden. In weiterer besonders bevorzugter Ausführungsform sind 1,1-GPM und 1,6-GPS in einer Menge von mindestens 86 Gew.-% in dem Gemisch vorhanden. Die nahezu äquimolare Mischung von 1,1-GPM und 1,6-GPS ist im Handel erhältlich und wird als Palatinit^{®} oder Isomalt bezeichnet. Aufgrund des unterstöchiometrischen Wassergehalts von Isomalt wirkt dieses als Trocknungsmittel für das Pektin und verhindert so eine Gelierkraftverminderung von gelagertem Pektin. Selbstverständlich können auch 1,1-GPM- oder 1,6-GPS angereicherte Gemische verwendet werden, wie sie in der DE 195 32 396 C2 beschrieben sind. Im Zusammenhang mit der vorliegenden Erfindung werden unter 1,1-GPM sowohl die kristallwasserhaltige (2 mol Kristallwasser pro mol 1,1-GPM) als auch die kristallwasserfreie Form von 1,1-GPM und eventuelle Zwischenformen verstanden.

In einer weiteren bevorzugten Ausführungsform wird ein Disaccharidalkohol-Gemisch eingesetzt, das die Komponenten 1,1-GPM, 1,6-GPS und 1-O-α-D-Glucopyranosyl-D-sorbit (1,1-GPS) enthält, gegebenenfalls in Verbindung mit Mannit, Sorbit und Oligomeren. Ein derartiges Gemisch ist in der EP 0 625 578 B1 beschrieben.

In einer weiteren bevorzugten Ausführungsform betrifft die Erfindung eines der vorgenannten Verfahren, wobei während oder nach dem zweiten Verfahrensschritt ein oder mehrere Süßungsmittel, wie Saccharose, Glucose, Fructose, Sorbit oder ähnliches sowie gegebenenfalls Zusatzstoffe, wie Konservierungsmittel, zugegeben werden.

In einer besonders bevorzugten Ausführungsform betrifft die Erfindung ein vorgenanntes Verfahren, wobei das hinzugegebene Süßungsmittel aus einem Gemisch aus Saccharose und Glucose in einem Verhältnis von wenigstens 75 Teilen Saccharose und maximal 25 Teilen Glucose besteht.

In einer weiteren bevorzugten Ausführungsform betrifft die Erfindung eines der vorgenannten Verfahren, wobei das Disaccharidalkohol-Gemisch in einer Menge von 0,5 bis 100 Gew.-%, bezogen auf die Pektinmenge, zugegeben wird.

In einer weiteren bevorzugten Ausführungsform betrifft die Erfindung eines der vorgenannten Verfahren, wobei der Hüllstoff, vorzugsweise ein hydrophober Stoff, besonders bevorzugt ein gehärtetes Pflanzenfett, und/oder ein amphiphiler Stoff, insbesondere ein Mono- oder Diglycerid, in einer Menge bis 20 Gew.-%, bezogen auf die Pektinmenge zugegeben wird. In bevorzugter Ausführung wird der Hüllstoff in erwärmter Form, das heißt in flüssiger Form, zugegeben. Die notwendige Erwärmungstemperatur liegt daher am oder über dem Schmelzpunkt des Hüllstoffs.

Die Erfindung betrifft in einer weiteren Ausführungsform eines der vorgenannten Verfahren, wobei das Pektin mit dem Disaccharidalkohol-Gemisch und/oder dem Hüllstoff besprüht wird. Insbesondere betrifft die Erfindung ein vorgenanntes Verfahren, wobei das Pektin mit dem Hüllstoff besprüht, das Disaccharidalkohol-Gemisch anschließend bei erhöhter Temperatur hinzugegeben wird und anschließend, nach Abkühlung, die anderen Komponenten, wie die Genußsäuren und die gegebenenfalls einzusetzenden Süßungsmittel und/oder Zusatzstoffe so zusammengemischt werden, daß die resultierende Geliermittelmischung zu einem lagerfähigen und entmischungsstabilen Produkt führt.

In einer weiteren bevorzugten Ausführungsform betrifft die Erfindung die vorgenannten Verfahren, wobei ein amidiertes Pektin eingesetzt wird.

Schließlich betrifft die Erfindung eine mittels der vorgenannten Verfahren hergestellte Geliermittelmischung, sowohl in Form eines Konzentrats als auch in Form eines mit Süßungsmitteln und/oder Zusatzstoffen versetzten Produktes (Gelierzucker). Insbesondere betrifft die Erfindung eine Geliermittelmischung, wobei diese, bevorzugt in feinverteilter Form, ein Pektin, ein Disaccharidalkohol-Gemisch und eine Genußsäure umfaßt, wobei das Pektin zumindest teilweise von einer Hüllstoffschicht und einer darüberliegenden Disaccharidalkohol-Gemischschicht umhüllt ist, sowie gegebenenfalls ein oder mehrere Süßungsmittel und einen oder mehrere Zusatzstoffe umfaßt. Die Mischung des feinverteilten Geliermittels, also des Pektins, mit dem Hüllstoff und dem Disaccharidalkohol-Gemisch sowie der Genußsäure und einem kleinen Teil Süßungsmittel führt zu einem nicht-staubenden Zwischenprodukt (Geliermittelmischung ohne Hauptmenge an Süßungsmitteln und Zusatzstoffen), auch als Konzentrat bezeichnet, so daß Verluste der teuersten Komponente, nämlich des Pektins, bei weiteren erfindungsgemäßen Verarbeitungsschritten, wie beispielsweise der Zugabe von der Hauptmenge an Süßungsmittel und Zusatzstoffen zum Erhalt des Gelierzuckers, minimiert werden können. Zudem verringert die Verwendung von gehärteten Pflanzenfetten beziehungsweise entsprechenden, gehärtete Fettsäuren enthaltenden Mono-/Diglyceriden die Gefahr des Ranzigwerdens der einsatzfähigen Geliermittelmischung, also des Endproduktes bzw. des Gelierzuckers.

Vorzugsweise sind im Konzentrat 1 bis 30 Gew.-% Süßungsmittel und im Gelierzucker 50 bis 97 Gew.-% Süßungsmittel enthalten. In bevorzugter Weise sieht die Erfindung den Einsatz von Saccharose, Glucose, Sorbit und/oder Fructose als Süßungsmittel vor. Insbesondere wird ein Süßungsmittel aus Saccharose und Glucose in einem Verhältnis von 100:0 bis 75:25 (Gew.-%) bevorzugt.

Es stellte sich auch überraschenderweise heraus, daß durch das Schützen des Geliermittels, des Pektins, mit dem Disaccharidalkohol-Gemisch und in vorteilhafter Ausgestaltung mit dem vorzugsweise hydrophoben beziehungsweise amphiphilen Hüllstoff die Stabilität beziehungsweise Gelierkraft in deutlicher und vorteilhafter Weise erhöht wurde, das heißt, daß der normalerweise zu beobachtende Gelierkraftverlust bei Lagerung erheblich reduziert wird. Für die Verpackung der erfindungsgemäßen Geliermittelmischungen, insbesondere des Konzentrats und des Gelierzuckers, kann ein weniger aufwendiges Material verwendet werden, so daß die Gebrauchstüchtigkeit des Produktes auch nach längerer Lagerung weniger nachläßt. Insbesondere kann auf die Verwendung von Verbund-Verpackungen mit einer Polyethylen-Schicht ganz verzichtet werden beziehungsweise eine Verpackung eingesetzt werden, die eine erheblich dünnere Polyethylen-Schicht aufweist. Dies bietet sowohl wirtschaftliche als auch ökologische Vorteile. Die Ursache dafür liegt unter anderem darin, daß die Wasseraufnahme von den erfindungsgemäßen Geliermittelmischungen aufgrund der Anwesenheit der erfindungsgemäß einzusetzenden Disaccharidalkohol-Gemische erheblich geringer als bei herkömmlichen Geliermittelmischungen ist.

Bei der Verwendung der, in bevorzugter Weise einen Hüllstoff aufweisenden, Geliermittelmischungen ergeben sich zudem Vorteile insofern, als daß die Bestandteile der Geliermittelmischung weniger leicht entmischen und das Kochgut bei der Herstellung von Konfitüren weniger zur Schaumbildung neigt. Dadurch kann der Endverbraucher sicherer und einfacher Konfitüren und Gelees mit der gewünschten Konsistenz herstellen.

Die Erfindung betrifft auch stabilisierte Pektine. Im Zusammenhang mit der vorliegenden Erfindung werden unter stabilisierten Pektinen Gemische aus Pektin und einem Gemisch umfassend 1,6-GPS und 1,1-GPM verstanden, wobei das Gemisch aus 1,6-GPS und 1,1-GPM ein Gemisch im Verhältnis 99:1 bis 1:99, vorzugsweise ein nahezu äquimolares Gemisch, ist. In einer weiteren Ausführungsform kann das Gemisch umfassend 1,1-GPM und 1,6-GPS zusätzlich noch 1,1-GPS sowie gegebenenfalls Mannit und Sorbit enthalten. In besonders bevorzugter Ausführungsform beträgt das Mengenverhältnis von Pektin zu dem Gemisch umfassend 1,1-GPM und 1,6-GPS in dem erfindungsgemäßen stabilisierten Pektin 1:1 bis 100:1, vorzugsweise 2:1 bis 100:1. Die erfindungsgemäßen stabilisierten Pektine zeichnen sich in vorteilhafter Weise dadurch aus, daß eine höhere Stabilität und verbesserte Lagerfähigkeit im Vergleich zu herkömmlichen Pektinen erreicht wird. Die Erfindung betrifft auch ein Verfahren zur Herstellung des erfindungsgemäßen stabilisierten Pektins, wobei das Pektin mit dem vorstehend erwähnten Gemisch umfassend 1,1-GPM und 1,6-GPS gemischt und ein stabilisiertes Pektin erhalten wird.

Weitere vorteilhafte Ausgestaltungen der Erfindung sind den Unteransprüchen zu entnehmen.

Die Erfindung wird im folgenden anhand der Ausführungsbeispiele und der dazugehörigen Figuren näher erläutert. Die Figuren zeigen:
- Figur 1: die relative Zunahme der RM-Werte in Abhängigkeit von der Zeit bei den Proben A, B, C, D und E,
- Figur 2: die relative Abnahme der HPE-Werte in Abhängigkeit von der Zeit bei den Proben A, B, C, D und E,
- Figur 3: die RM-Werte in Abhängigkeit von der Zeit bei den Proben A, B, D, F und G,
- Figur 4: die HPE-Werte in Abhängigkeit von der Zeit bei den Proben A, B, D, F und G,
- Figur 5: die RM-Werte in Abhängigkeit von der Zeit bei den Proben H, I, K, L und M,
- Figur 6: die HPE-Werte von Konfitüren in Abhängigkeit von der Zeit bei den Proben A, B, C, D, E, F und G,
- Figur 7: die RM-Werte (amidiertes Pektin) in Abhängigkeit von der Zeit bei den Proben N und O und
- Figur 8: die Wasseraufnahme von Gelierzuckerkonzentraten mit dem Inhaltsstoff Isomalt in Abhängigkeit von der Zeit bei den Proben A, F und G.

### Beispiel 1

Verfahren zur Prüfung einer verbesserten Lagerstabilität (Streßtest)

Um festzustellen, wie sich die Gelierfähigkeit einer Geliermittelmischung ändert, wurde ein Streßtest durchgeführt, der es erlaubt, innerhalb eines Zeitraums von 14 Tagen signifikante Änderungen der Gelierfähigkeit einer Geliermittelmischung festzustellen. Die Überprüfung der Lagerstabilität sollte unter stark erschwerten Bedingungen (hohe Temperatur, hohe Luftfeuchtigkeit) durchgeführt werden, die in Deutschland nicht angetroffen werden. Daher wurde der im folgenden beschriebene Streßtest eingesetzt.

Die Proben, die dem Streßtest unterworfen werden, stellen Mischungen dar, die aus Pektin (erfindungsgemäß mit einem Hüllstoff und/oder einem Disaccharidalkohol-Gemisch geschützt oder ungeschützt), einem Süßungsmittel, nämlich Saccharose, und Citronensäure, ungefähr im Gewichtsverhältnis 1:1:1 bestehen. Durch erhöhte Konzentration, zum Beispiel der Citronensäure im Vergleich zu den Verhältnissen in verkaufsfähigem Gelierzucker, dessen Citronensäuregehalt etwa bei 1 % liegt, sind erschwerende Bedingungen für das Pektin gegeben.

Die Lagerbedingungen wurden so gewählt, daß 35 g (verrechnet mit SAG-Werten des Pektins und gegebenenfalls zugegebenem Coatingmittel) der vorgenannten Konzentrate offen in Petrischalen bei 55°C und einer relativen Luftfeuchtigkeit von 50 % rF über 14 beziehungsweise 21 Tage (Ergebnisse für 21 Tage sind in den folgenden Beispielen in Klammern () angezeigt) in einem Klimaschrank gelagert werden und die Proben nach 0, 1, 2, 5, 7, 14 und teilweise 21 Tagen mit Zucker zu einem Kilogramm Geliermittelmischung gemischt werden. Von diesen Gelierzuckern wurden dann RM-Werte (Doppelbestimmung) und HPE-Werte (Dreifach-Bestimmung) gemessen. Von den 0, 7 und 14 Tage gelagerten Proben wurden außerdem Erdbeerkonfitüren hergestellt und deren HPE-Wert (Dreifach-Bestimmung) gemessen.

Für die Messung der Gelierkraft eines Gelierzuckers werden zwei Methoden verwendet, die Bestimmung des sogenannten RM-Wertes (Ridgeli-Meter, Einsacken eines definiert hergestellten Gelkegels, größere Zahl gleich schlechtere Gelstärke), und des sogenannten HPE-Wertes (Herbstreith-Pektinometer-Einheiten, Kraft beim Herausziehen eines in das Gel eingegossenen Prüfkörpers, kleinere Zahlen gleich schlechtere Gelstärke). HPE-Werte größer als etwa 300 ergeben eine genügend feste Konsistenz einer mit diesem Gelierzucker hergestellten Konfitüre. Beide Meßverfahren sind nur der Tendenz nach vergleichbar, da sie auch unterschiedliche Eigenschaften des Gels bestimmen.

Die Auswertung und Begutachtung der nachfolgenden Experimente erfolgt durch Bestimmung der Steigung von Ausgleichsgeraden.

Ist die positive Steigung der Ausgleichsgrade einer RM-Messung bei einer erfindungsgemäßen Probe kleiner im Vergleich zur Steigung der Null-Probe, kann auf eine bessere Lagerstabilität auch unter feuchtwarmen Bedingungen der entsprechenden Geliermittelmischung geschlossen werden, da höhere RM-Werte einer verminderten Gelierkraft entsprechen.

Ist die negative Steigung der Ausgleichsgrade einer HPE-Messung bei einer erfindungsgemäßen Probe dem Betrag nach kleiner im Vergleich zur Steigung der Null-Probe, kann auch auf eine bessere Lagerstabilität der entsprechenden Geliermittelmischung geschlossen werden, da geringere HPE-Werte eine verminderte Gelierkraft widerspiegeln.

### Beispiel 2: Herstellung von Geliermittelmischungen

Mischen von Pektin mit Palmfett 58 und Isomalt.

In einem Lödige-Mischer werden 2,5 bis 5 kg Pektin (handelsübliche Apfelpektine, Pektin X oder Pektin Y) auf 59°C erwärmt, dazu wird innerhalb von 10 Minuten 250 g eines auf 75°C vorgewärmten gehärteten Palmfettes (Schmelzpunkt 58°C) in den bewegten Inhalt des Mischers eingesprüht. Anschließend wird in das warme Gemisch Isomalt oder Saccharose (gleiche oder halbe, auf Pektin bezogene, Gewichtsmenge) feiner Körnung zugegeben und noch circa 20 Minuten weiter warm gemischt. Die dabei entstehenden Partikel besitzen einen Pektinkern, eine innere Fett-Schicht und eine äußere Saccharose-Schicht beziehungsweise Isomalt-Schicht.

Aus diesen geschützten Pektinen werden Konzentrate (Mischung mit Citronensäure und Zucker) hergestellt und dem Streßtest unterworfen.
Die Konzentrate enthalten:
11,3 g Pektin (ggf. zuzüglich 1,13 g Palmfett)
12,5 g Citronensäure und
11,3 g Isomalt

Die in den folgenden Beispielen eingesetzten Geliermittelmischungen wurden auf vorgenannte Weise hergestellt, gegebenenfalls bis auf jeweils angegebene Änderungen in Qualität und Quantität der Zusammensetzung.

### Beispiel 3

### Streßtest

Folgende Gelierzuckerkonzentrate wurden dem in Beispiel 1 beschriebenen Streßtest (55°C, 50% rF) unterworfen (Pektinbehandlung):
A = Nullprobe (unbehandeltes Pektin X), als Vergleich
B = Pektin X, besprüht mit Palmfett (10 % bezogen auf Pektinmenge), dann mit Puderzucker warm gemischt (gleiche Menge wie Pektin), als Vergleich
C = Pektin X/Puderzucker-Mischung mit 10 % Palmfett (bezogen auf Pektinmenge) besprüht, Pektinmenge = Zuckermenge, als Vergleich
D = analog B, nur Puderzucker ersetzt durch Isomalt
E = analog C, nur Puderzucker ersetzt durch Isomalt

| Probe | A | | B | | C | | D | | E | |
|---|---|---|---|---|---|---|---|---|---|---|
| Zeit (Tage) | RM | HPE | RM | HPE | RM | HPE | RM | HPE | RM | HPE |
| 0 | 25 | 1393 | 25 | 1169 | 26 | 1299 | 24 | 1108 | 25 | 1130 |
| 1 | 28 | 1303 | 25 | 1149 | 26 | 1232 | 23 | 1151 | 28 | 1017 |
| 2 | 27 | 1127 | 28 | 1140 | 31 | 992 | 29 | 1134 | 28 | 1054 |
| 5 | 34 | 1023 | 42 | 897 | 40 | 999 | 34 | 1081 | 35 | 1020 |
| 7 | 38 | 1064 | 50 | 883 | 53 | 827 | 39 | 1015 | 38 | 912 |
| 14 | (~77) | 481 | (~75) | 345 | (~75) | 318 | 63 | 675 | 58 | 682 |
| mittl. Änderung pro Tag | 3.63 | -59.6 | 3.68 | -66.3 | 3.76 | -59.8 | 2.32 | -29.3 | 2.83 | -32.7 |
| % | 100 | 100 | 101 | 111 | 104 | 100 | 64 | 49 | 78 | 55 |

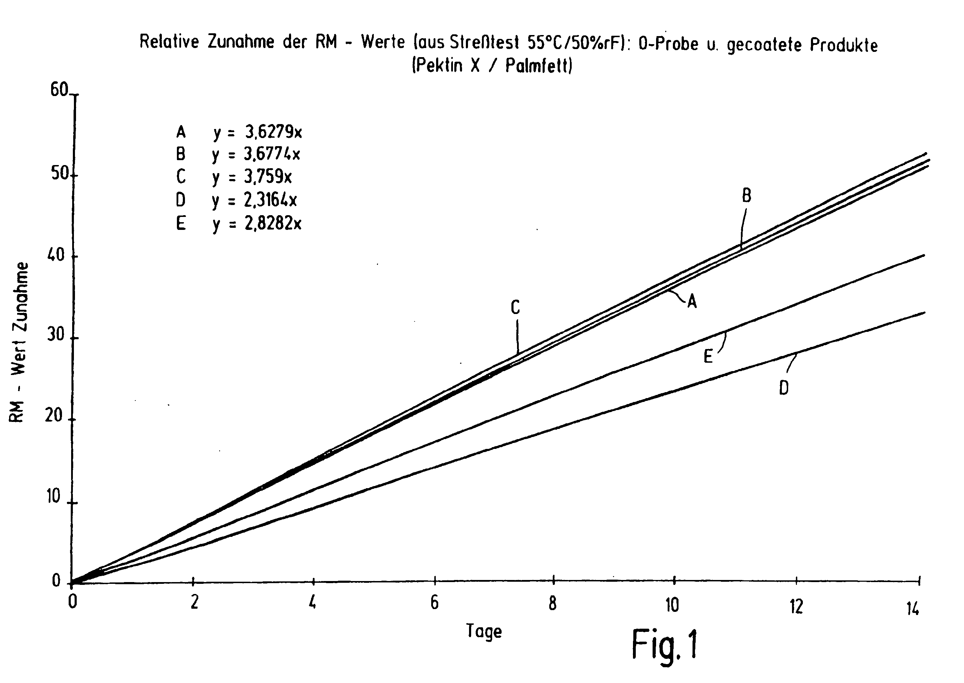

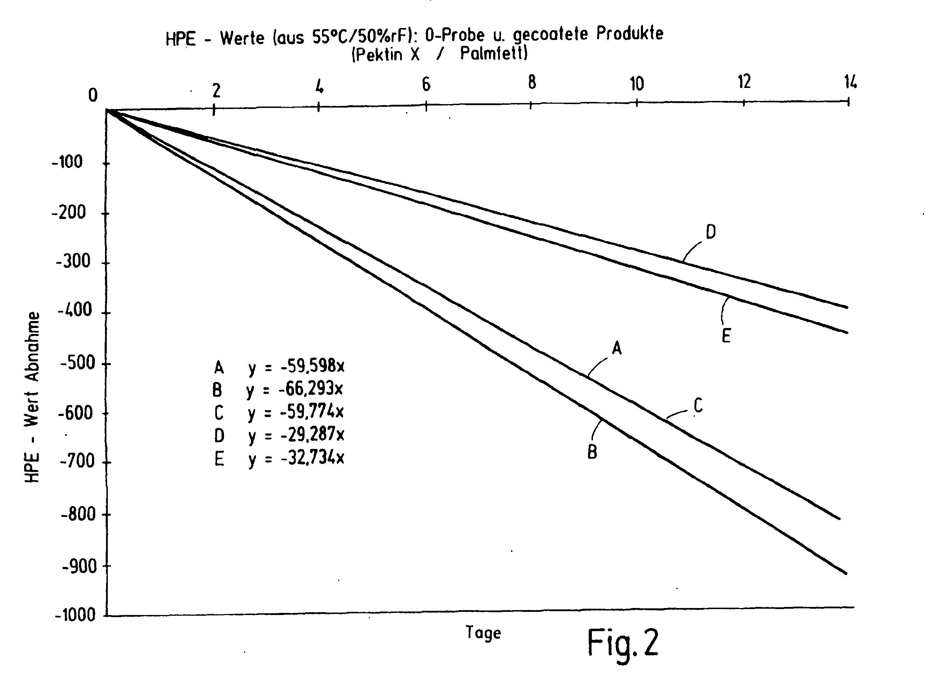

Die mittleren Änderungen pro Tag ergeben sich aus den Ausgleichsgeraden (als Steigungen), die durch die Meßpunkte gelegt werden. Diese sind graphisch in den Figuren 1 und 2 dargestellt.

Die erfindungsgemäßen Produkte zeigen nach der RM-Methode nur ein 64 bis 78%iges Nachlassen der Gelierkraft des Vergleichsproduktes (= 100 %) bei Streßlagerung, das bedeutet eine um 30 bis 60 % erhöhte mögliche Lagerzeit..

Nach der HPE-Methode ist der Gelierkraftverlust des Vergleichsproduktes A mehr als doppelt so hoch wie der des erfindungsgemäßen Produktes, zum Beispiel D. Dadurch läßt sich das erfindungsgemäße Produkt mehr als doppelt so lange lagern bis der HPE-Wert soweit abnimmt wie bei einem Standardprodukt. Die sogenannte Mindesthaltbarkeit von handelsüblichem Gelierzucker (1:1) beträgt circa 15 bis 18 Monate, wobei zusätzlich Sandwich-Verpackungen mit Polyethylen-Folien notwendig sind.

Die ermittelten Ergebnisse können von den untersuchten Geliermittelmischungen (Konzentraten) auf das Lagerverhalten von Gelierzucker übertragen werden und zeigen die überraschenderweise gefundenen deutlichen Vorteile des erfindungsgemäßen Produktes.

### Beispiel 4

### Streßtest

Folgende Gelierzuckerkonzentrate wurden dem in Beispiel 1 beschriebenen Streßtest (55°C, 50% rF) unterworfen (Pektinbehandlung):
A = Nullprobe (unbehandeltes Pektin X), als Vergleich (s. Beispiel 3)
B = Pektin X, besprüht mit Palmfett (10 % bezogen auf Pektinmenge), dann mit Puderzucker warm gemischt (gleiche Menge wie Pektin), als Vergleich (s. Beispiel 3)
D = analog B, nur Puderzucker ersetzt durch Isomalt(s. Beispiel 3)
F = analog D, jedoch ohne Palmfett
G = analog F, jedoch Pektin zu Isomalt gleich 1:0,5

| Probe | F | | G | |
|---|---|---|---|---|
| Zeit | RM | HPE | RM | HPE |
| (Tage) | | | | |
| 0 | 26 | 1191 | 26 | 1208 |
| 3 | 32 | 1053 | 31 | 1098 |
| 8 | 50 | 845 | 48 | 855 |
| 14 | 70 | 430 | 70 | 398 |
| 21 | / | 215 | / | 199 |
| mittl. Änderung pro Tag | 3.22 | -48.5 | 3.22 | -51.2 |
| % | 89 | 81 | 89 | 86 |

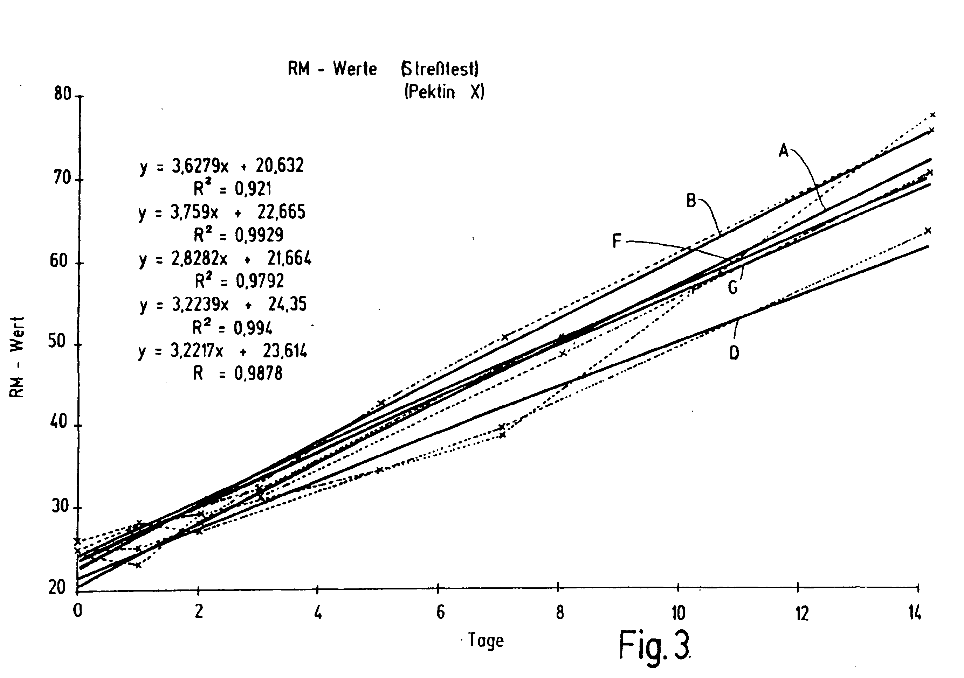

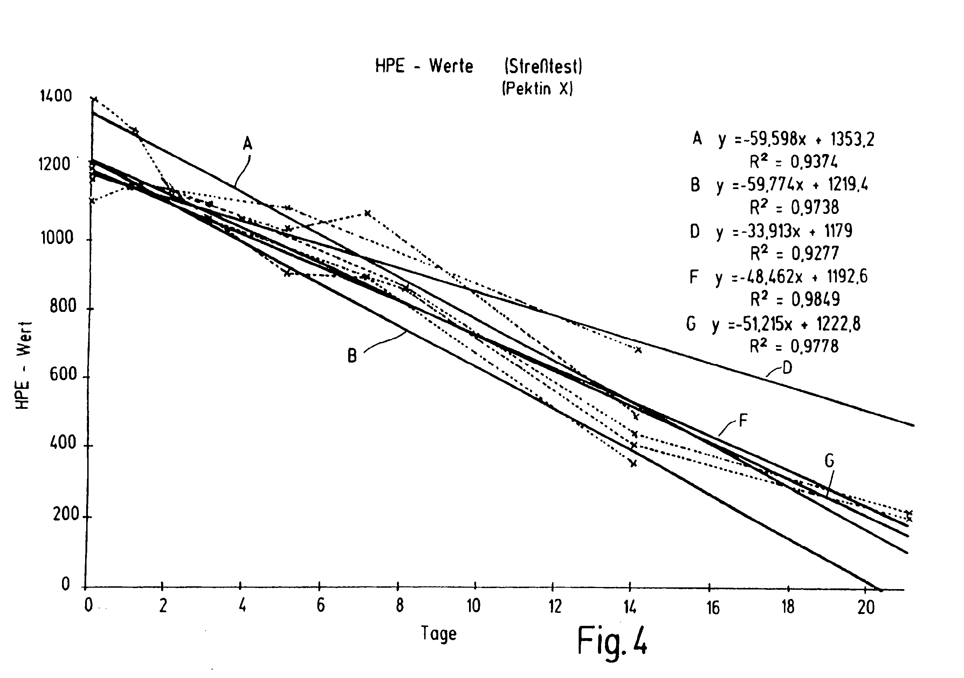

Die mittleren Änderungen pro Tag ergeben sich aus den Ausgleichsgeraden (als Steigungen), die durch die Meßpunkte gelegt werden. Dies ist graphisch in den Figuren 3 und 4 dargestellt.

Die prozentuale Änderung bezieht sich auf die Null-probe (A) und zeigt, daß die Gelierkraftabnahme bei Probe F und G in allen Fällen geringer ist wie bei Probe A.

### Beispiel 5

### Streßtest (mit Pektin Y-enthaltenden Gemischen)

Folgende Gelierzuckerkonzentrate wurden dem in Beispiel 1 beschriebenen Streßtest (55°C, 50% rF) unterworfen (Pektinbehandlung):
- H =: Nullprobe (unbehandeltes Pektin Y), als Vergleich
- I =: Pektin Y, besprüht mit Palmfett (10 % bezogen auf Pektinmenge), dann mit Puderzucker warm gemischt (gleiche Menge wie Pektin), als Vergleich
- K =: analog I, jedoch Puderzucker ersetzt durch Isomalt
- L =: analog F, jedoch Pektin Y
- M =: analog L, jedoch Pektin zu Isomalt gleich 1:0,5

| Probe | H | I | K | L | M |
|---|---|---|---|---|---|
| Zeit | RM | RM | RM | RM | RM |
| (Tage) | | | | | |
| 0 | 22 | 20 | 20 | 21 | 21 |
| 1 | 22 | 23 | 21 | | |
| 2 | 24 | 24 | 22 | | |
| 3 | | | | 24 | 25 |
| 5 | 26 | 32 | 25 | | |
| 7 | 33 | 44 | 31 | | |
| 8 | | | | 39 | 39 |
| 14 | (72) | (75) | 57 | 65 | 70 |
| mittl. Änderung pro Tag | 3.54 | 3.97 | 2.63 | 3.22 | 3.53 |
| % | 100 | 112 | 74 | 91 | 100 |

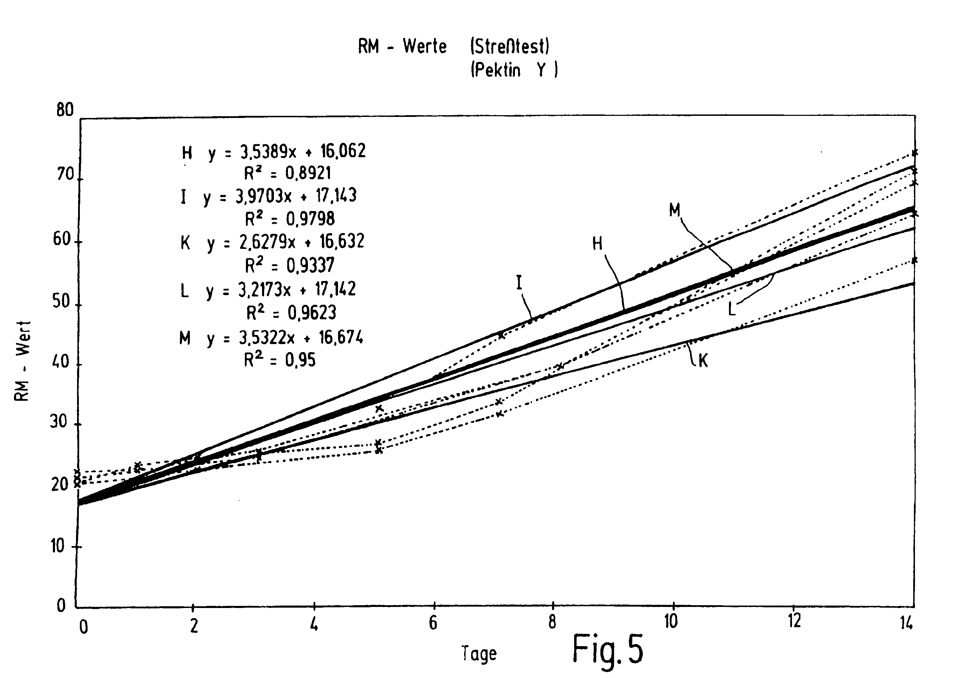

Die mittleren Änderungen pro Tag ergeben sich aus den Ausgleichsgeraden (als Steigungen), die durch die Meßpunkte gelegt werden. Die graphische Darstellung findet sich in Figur 5.

Die prozentuale Änderung bezieht sich auf die Null-probe (H) und zeigt, daß die Gelierkraftabnahme besonders bei Probe K deutlich geringer ausfällt.

### Beispiel 6

### Streßtest

Streßtest von Konzentraten und HPE-Werte der damit hergestellten Erdbeer-Konfitüren (Pektin X).

Die in Beispiel 3 und 4 beschriebenen Geliermittelkonzentrate werden zu Gelierzucker gemischt (35 g Konzentrat + 965 g Zucker) und daraus eine ErdbeerKonfitüre hergestellt. Als Früchte werden tiefgefrorene Erdbeeren (Senga sengana), und zwar 970 g, in einem Haushaltsmixer (nach Auftauen) püriert, mit 1000 g obengenanntem Gelierzucker gemischt und 4 Minuten gekocht. Der TS-Gehalt beträgt 62 Bx, der pH-Wert 2,9. Die heiße Konfitüre wird in HPE-Becher eingefüllt und nach 24 Stunden Temperierung bei 20°C der HPE-Wert bestimmt.

| Probe | A | B | C | D | E | F | G |
|---|---|---|---|---|---|---|---|
| zeit | HPE | HPE | HPE | HPE | HPE | HPE | HPE |
| (Tage) | | | | | | | |
| 0 | 566 | 712 | 641 | 889 | 762 | 764 | 790 |
| 7 | 420 | 524 | 580 | 689 | 605 | - | - |
| 8 | - | - | - | - | - | 452 | 472 |
| 14 | 353 | 374 | 367 | 491 | 482 | 404 | 382 |

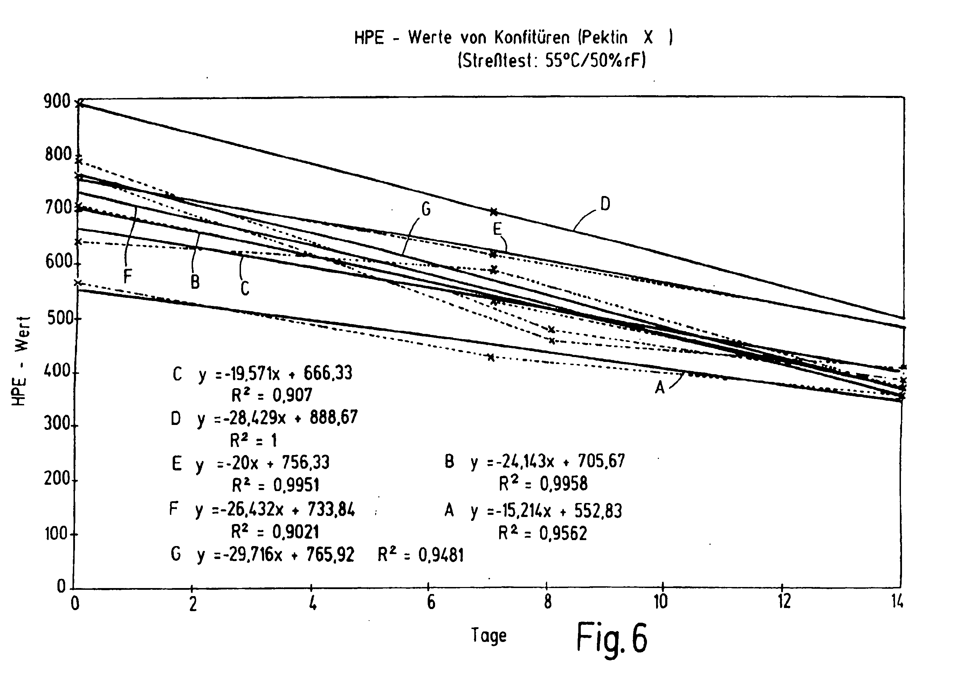

In der Figur 6 sind die Ausgleichsgeraden der entsprechenden HPE-Werte dargestellt.

Tendenziell zeigen sich bei den HPE-Werten von Erdbeer-Konfitüren, daß die Nullprobe mit 566 HPE-Einheiten (Dreifach-Bestimmung) tiefer liegt als die Proben, die entweder gecoatetes, das heißt mit Hüllstoff versehenes Pektin und/oder Isomalt enthalten, wobei der höchste HPE-Wert mit 889 HPE-Einheiten (Dreifach-Bestimmung) erreicht wird, und zwar durch das Produkt, das sowohl den Hüllstoff als auch Isomalt (Verhältnis Pektin zu Isomaltgleich 1:1) enthält. Die Gelierkraftabnahme der verschiedenen Produkte sind relativ ähnlich (siehe Steigung der Ausgleichsgeraden in Figur 6).

### Beispiel 7

### Streßtest (Amidiertes Pektin)

Folgende Gelierzuckerkonzentrate wurden dem in Beispiel 1 beschriebenen Streßtest (55°C, 50% rF) unterworfen (Pektinbehandlung) :
N = Nullprobe, amidiertes Pektin
O = analog D, jedoch amidiertes Pektin

| Probe | N | 0 |
|---|---|---|
| Zeit | RM | RM |
| (Tage) | | |
| 0 | 24 | 24 |
| 1 | 24 | 24 |
| 2 | 26 | 26 |
| 7 | 45 | 36 |
| 14 | (~75) | 67 |
| mittl. Änderung pro Tag | 3.44 | 3.09 |
| % | 100 | 90 |

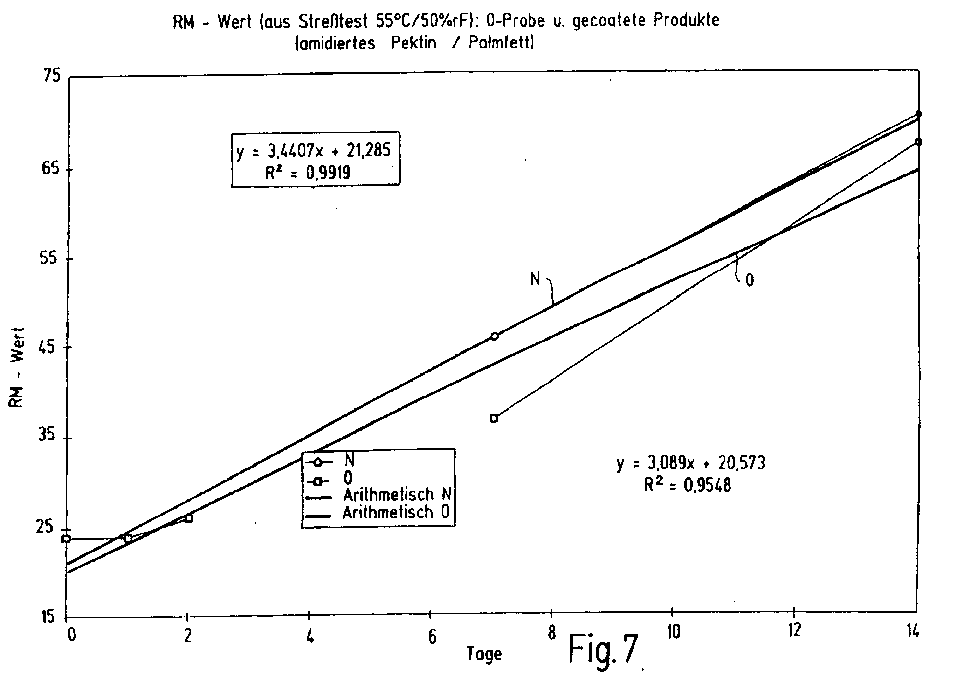

Die mittleren Änderungen pro Tag ergeben sich aus den Ausgleichsgeraden (als Steigungen), die durch die Meßpunkte gelegt werden. Die graphische Darstellung findet sich in Figur 7.

Die prozentuale Änderung bezieht sich auf die Null-probe (N) und zeigt, daß die Gelierkraftabnahme bei Probe 0 etwas geringer ausfällt.

Wie aus Figur 7 deutlich erkennbar, verlängert das erfindungsgemäße Verfahren unter Einsatz von Isomalt die Lagerfähigkeit auch bei amidiertem Pektin. Die tägliche durchschnittliche RM-Wert-Zunahme beträgt 3,09 RM-Einheiten im Vergleich zu 3,44 RM-Einheiten des Produktes mit ungeschütztem Pektin.

### Beispiel 8

Wasseraufnahme von Gelierzuckerkonzentraten mit Isomalt

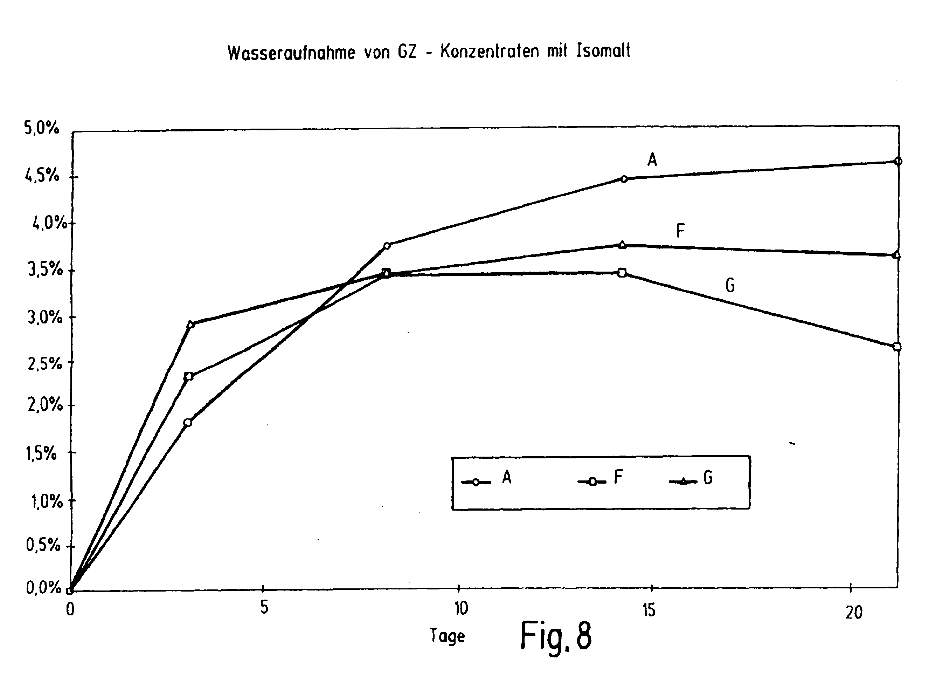

Es wurde ein handelsübliches Pektin nach folgender Tabelle zu Gelierzuckerkonzentraten gemischt und 21 Tage in offenen Petrischalen bei 55°C und 50 % rF gelagert. Die Wasseraufnahme ist in Figur 8 dargestellt. Die Zusammensetzungen der Konzentrate A, F und G sind den Beispielen 3 und 4 sowie der folgenden Tabelle zu entnehmen.

| Versuch | A | F | G |
|---|---|---|---|
| Pektin | X | X | X |
| Pektin/Isomalt-Verhältnis | - | 1:1 | 1:0,5 |
| Pektin (g) | 11.32 | 11.32 | 11.32 |
| Saccharose (g) | 11.30 | 0 | 5.53 |
| Citronensäure (g) | 12.48 | 12.48 | 12.48 |
| Isomalt | 0 | 11.30 | 5.66 |

Erkennbar ist, daß die Wasseraufnahme der erfindungsgemäßen Konzentrate F und G erheblich geringer als die des Vergleichs ist.

### Beispiel 9

### Pektinbeschichtung I

In einem Lödige-Mischer mit Thermostat zur Wandbeheizung wurden 5 kg Pektin (Pektin X) mit 0,25 kg Palmfett 58 (Firma Juchem, Schmelzpunkt 58°C) bei Raumtemperatur, d.h. 25°C, 10 Minuten gemischt. Das eingesetzte Palmfett war pulverförmig mit einer Körngrößenverteilung zwischen 50 bis 350 µm. An- schließend wurde die Mischung 80 Minuten lang in kleinen Schritten auf 58°C, d.h. den Schmelzpunkt des Palmfettes erwärmt. Während der Aufheizphase und am Ende der Mischzeit wurden Proben genommen. Bei 58°C wurde für weitere 20 Minuten gemischt.

Die Proben wurden mit dem Mikroskop untersucht und festgestellt, daß ein Teil des Pektins mit Fett behaftet war. Teile des Fetts sind keine Verbindung mit dem Pektin eingegangen und als weiße Fetttröpfchen zu erkennen.

### Beispiel 10

### Pektinbeschichtung II

In einem Lödige-Mischer mit Thermostat zur Wandbeheizung wurden 5 kg Pektin (Pektin X) mit 0,25 kg Palmfett 58 (Firma Juchem, Schmelzpunkt 58°C) bei Raumtemperatur, d.h. 25°C, 10 Minuten gemischt. Das eingesetzte Palmfett war pulverförmig mit einer Körngrößenverteilung zwischen 50 bis 350 µm. Anschließend wurde möglichst schnell über einen Zeitraum von 30 Minuten auf 59°C aufgeheizt, d.h. 1°C über den Schmelzpunkt des Fettes. Anschließend wurde weitere 60 Minuten gemischt.

Unter dem Mikroskop konnte festgestellt werden, daß der weitaus größte Teil des Pektins von Palmfett überzogen war und nur noch sehr wenige einzelne Fetttröpfchen vorlagen.

## Patentansprüche

1. Verfahren zur Herstellung einer Geliermittelmischung aus Pektin, einer Genußsäure und einem Disaccharidalkohol-Gemisch, wobei
in einem ersten Verfahrensschritt das Pektin mit dem Disaccharidalkohol-Gemisch gemischt und
in einem zweiten Verfahrensschritt die Genußsäure hinzugegeben wird
und wobei Pektin, Disaccharidalkohol-Gemisch, Genußsäure in fester Form, insbesondere feinkörnig, vermahlen oder pulverig, vorliegen.

2. Verfahren nach Anspruch 1, wobei das Disaccharidalkohol-Gemisch ein Gemisch aus 1,1-GPM (1-O-α-D-Glucopyranosyl-D-mannit) und 1,6-GPS (6-O-α-D-Glucopyranosyl-D-sorbit) ist.

3. Verfahren nach einem der vorhergehenden Ansprüche, wobei das Disaccharidalkohol-Gemisch ein äquimolares Gemisch aus 1,1-GPM und 1,6-GPS ist.

4. Verfahren nach einem der vorhergehenden Ansprüche, wobei das Disaccharidalkohol-Gemisch ein Gemisch aus
1,1-GPM und 1,6-GPS und 1,1-GPS (1-O-α-D-Glucopyranosyl-D-sorbit) ist.

5. Verfahren nach einem der vorhergehenden Ansprüche, wobei vor dem ersten Verfahrensschritt das Pektin mit einem Hüllstoff in auf über den Schmelzpunkt des Hüllstoffs erwärmter Form gemischt wird.

6. Verfahren nach einem der Ansprüche 1 bis 4, wobei nach dem ersten Verfahrensschritt und vor dem zweiten Verfahrensschritt das Pektin und das Disaccharidalkohol-Gemisch mit einem Hüllstoff in auf über den Schmelzpunkt des Hüllstoffs erwärmter Form gemischt wird.

7. Verfahren nach einem der Ansprüche 5 oder 6, wobei der Hüllstoff ein hydrophober oder amphiphiler Stoff, vorzugsweise ein Mono- oder Diglycerid ist.

8. Verfahren nach einem der Ansprüche 5 bis 7, wobei der Hüllstoff ein gehärtetes Pflanzenfett ist.

9. Verfahren nach einem der vorhergehenden Ansprüche, wobei während oder nach dem zweiten Verfahrensschritt ein oder mehrere weitere Süßungsmittel und/oder Zusatzstoffe hinzugegeben werden.

10. Verfahren nach einem der vorhergehenden Ansprüche, wobei das Süßungsmittel Saccharose, Sorbit, Glucose und/oder Fructose ist, insbesondere ein Gemisch aus Saccharose und Glucose in einem Verhältnis von mindestens 75 Teilen Saccharose zu maximal 25 Teilen Glucose (Gew.-%).

11. Verfahren nach einem der Ansprüche 9 oder 10, wobei der Zusatzstoff ein Konservierungsmittel ist.

12. Verfahren nach einem der vorhergehenden Ansprüche, wobei das Disaccharidalkohol-Gemisch in einer Menge von 0,5 bis 100 Gew.-%, bezogen auf die Pektin-Menge, zugegeben wird.

13. Verfahren nach einem der Ansprüche 5 bis 12, wobei der Hüllstoff in einer Menge bis 20 Gew.-%, bezogen auf die Pektin-Menge und das gegebenenfalls vorhandene Disaccharidalkohol-Gemisch, zugegeben wird.

14. Verfahren nach einem der Ansprüche 5 oder 7 bis 13, wobei das Pektin mit dem Hüllstoff, insbesondere dem hydrophoben oder amphiphilen Stoff, gemischt, vorzugsweise besprüht wird, das Disaccharidalkohol-Gemisch anschließend bei erhöhter Temperatur dazugegeben wird und nach Abkühlen die anderen Komponenten, insbesondere die Genußsäure und gegebenenfalls das weitere Süßungsmittel und der Zusatzstoff, so zusammengemischt werden, daß die resultierende Geliermittelmischung zu einem lagerfähigen und entmischungsstabilen Produkt führt.

15. Verfahren nach einem der vorhergehenden Ansprüche, wobei das Pektin ein amidiertes Pektin ist.

16. Verfahren nach einem der vorhergehenden Ansprüche, wobei die Genußsäure Citronensäure, Milchsäure, Weinsäure, D-Äpfelsäure, L-Äpfelsäure, DL-Äpfelsäure, L-Ascorbinsäure, Bernsteinsäure, Gluconsäure oder Glucono-delta-lakton ist.

17. Geliermittelmischung in fester, feinkörniger, vermahlener oder pulveriger Form, umfassend ein Pektin, ein Disaccharidalkohol-Gemisch, einen Hüllstoff und eine Genußsäure, wobei das Pektin zumindest teilweise von einer Hüllstoffschicht und einer darüber liegenden Schicht aus dem Disaccharidalkohol-Gemisch umhüllt ist.

18. Geliermittelmischung in fester, feinkörniger, vermahlener oder pulveriger Form, umfassend ein Pektin, ein Disaccharidalkohol-Gemisch und eine Genußsäure, wobei das Pektin zumindest teilweise von einer Schicht aus dem Disaccharidalkohol-Gemisch umhüllt ist.

19. Geliermittelmischung in fester, feinkörniger, vermahlener oder pulveriger Form, umfassend ein Pektin, ein Disaccharidalkohol-Gemisch und eine Genußsäure, wobei das Pektin und das Disaccharidalkohol-Gemisch zumindest teilweise von einem Hüllstoff umhüllt sind.

20. Geliermittelmischung nach einem der Ansprüche 17 bis 19, wobei diese ein weiteres Süßungsmittel, insbesondere Saccharose, Glucose, Fructose und/oder Sorbit enthält, vorzugsweise 50 bis 97% Gew.-% bezogen auf das Gesamtgewicht der Geliermittelmischung und gegebenenfalls Zusatzstoffe enthält.

21. Stabilisiertes Pektin umfassend ein Gemisch aus Pektin und einem Disaccharidalkohol-Gemisch aus 1,1-GPM und 1,6-GPS, im Verhältnis 99:1 bis 1:99, wobei Pektin in fester Form, insbesondere feinkörnig, vermahlen oder pulverig, vorliegt und worin Pektin von einer Schicht aus Disaccharidalkohol-Gemisch umhüllt vorliegt.

22. Stabilisiertes Pektin nach Anspruch 21, wobei das Mengenverhältnis von Pektin zu dem Gemisch aus 1,1-GPM und 1,6-GPS 1:1 bis 100:1, vorzugsweise 2:1 bis 100:1 beträgt.

23. Verfahren zur Herstellung eines stabilisierten Pektins, wobei Pektin mit einem Disaccharidalkohol-Gemisch aus 1,1-GPM und 1,6-GPS, im Verhältnis 99:1 bis 1:99, gemischt wird, wobei Pektin und Disaccharidalkohol-Gemisch in fester Form, insbesondere feinkörnig, vermahlen oder pulverig, vorliegen, und Pektin zumindest teilweise von dem Disaccharidalkohol-Gemisch umhüllt wird.

## Claims

1. Process for the production of a gelling agent mixture of pectin, a culinary acid and a disaccharide alcohol mixture,
the pectin being mixed with the disaccharide alcohol mixture in a first process step and
the culinary acid being added in a second process step
and pectin, disaccharide alcohol mixture, culinary acid being present in the solid form, in particular fine grained, ground or pulverous.

2. Process according to claim 1, the disaccharide alcohol mixture being a mixture of 1,1-GPM (1-O-α-D-glucopyranosyl-D-mannitol) and 1,6-GPS (6-O-α-D-glucopyranosyl-D-sorbitol).

3. Process according to one of the preceding claims, the disaccharide alcohol mixture being an equimolar mixture of 1,1-GPM and 1,6-GPS.

4. Process according to one of the preceding claims, the disaccharide alcohol mixture being a mixture of 1,1-GPM and 1,6-GPS and 1,1-GPS (1-O-α-D-glucopyranosyl-D-sorbitol).

5. Process according to one of the preceding claims, the pectin being mixed, before the first process step, with an enveloping substance in a form heated to above the melting point of the enveloping substance.

6. Process according to one of claims 1 to 4, the pectin and the disaccharide alcohol mixture being mixed, after the first process step and before the second process step, with an enveloping substance in a form heated to above the melting point of the enveloping substance.

7. Process according to one of claims 5 or 6, the enveloping substance being a hydrophobic or amphiphilic substance, preferably a monoglyceride or diglyceride.

8. Process according to one of claims 5 to 7, the enveloping substance being a hardened vegetable fat.

9. Process according to one of the preceding claims, one or more further sweeteners and/or additives being added during or after the second process step.

10. Process according to one of the preceding claims, the sweeter being sucrose, sorbitol, glucose and/or fructose, in particular a mixture of sucrose and glucose, in a ratio of at least 75 parts sucrose to maximum 25 part glucose (% by wt.).

11. Process according to one of claims 9 or 10, the additive being a preservative.

12. Process according to one of the preceding claims, the disaccharide alcohol mixture being added in a quantity of 0.5 to 100 % by wt., based on the quantity of pectin.

13. Process according to one of claims 5 to 12, the enveloping substance being added in a quantity of up to 20 % by wt, based on the quantity of pectin and the optionally present disaccharide alcohol mixture.

14. Process according to one of claims 5 or 7 to 13, the pectin being mixed, preferably sprayed, with the enveloping substance, in particular the hydrophobic or amphiphilic substance, the disaccharide alcohol mixture being subsequently added at elevated temperature and the other components, in particular the culinary acid and optionally the further sweetener and the additive, being mixed together, after cooling, in such a way that the resulting gelling agent mixture leads to a storable and demixing-stable product.

15. Process according to one of the preceding claims, the pectin being an amidated pectin.

16. Process according to one of the preceding claims, the culinary acid being citric acid, lactic acid, tartaric acid, D-malic acid, L-malic acid, DL-malic acid, L-ascorbic acid, succinic acid, gluconic acid or glucono-delta-lactone.

17. Gelling agent mixture in the solid, fine grained, ground or pulverous form comprising a pectin, a disaccharide alcohol mixture, an enveloping substance and a culinary acid, the pectin being enveloped at least partially by an enveloping layer and a superimposed layer of the disaccharide alcohol mixture.

18. Gelling agent mixture in the solid, fine grained, ground or pulverous form comprising a pectin, a disaccharide alcohol mixture and a culinary acid, the pectin being enveloped at least partially by a layer of the disaccharide alcohol mixture.

19. Gelling agent mixture in the solid, fine grained, ground or pulverous form comprising a pectin, a disaccharide alcohol mixture and a culinary acid, the pectin and the disaccharide alcohol mixture being enveloped at least partially by an enveloping substance.

20. Gelling agent mixture according to one of claims 17 to 19, this containing a further sweetener, in particular sucrose, glucose, fructose and/or sorbitol, preferably 50 to 97 % by wt., based on the total weight of the gelling agent mixture and optionally additives.

21. Stabilized pectin comprising a mixture of pectin and a disaccharide alcohol mixture of 1,1-GPM and 1,6-GPS in a ratio of 99:1 to 1:99, pectin being present in the solid form, in particular fine-grained, ground or pulverous, and pectin being present enveloped by a layer of disaccharide alcohol mixture.

22. Stabilized pectin according to claim 21, the quantitative ratio of pectin to the mixture of 1,1-GPM and 1,6-GPS being 1:1 to 100:1, preferably 2:1 to 100:1.

23. Process for the production of a stabilized pectin, pectin being mixed with a disaccharide alcohol mixture of 1,1-GPM and 1,6-GPS in a ratio of 99:1 to 1:99, pectin and the disaccharide alcohol mixture being present in the solid form, in particular fine grained, ground or pulverous and the pectin being enveloped at least partially by the disaccharide alcohol mixture.

## Revendications

1. Procédé de fabrication d'une composition contenant un agent de gélification à base de pectine, d'un acide alimentaire et d'un mélange alcool - disaccharide dans lequel
au cours d'une première étape du procédé, la pectine est mélangée avec le mélange alcool - disaccharide et
au cours d'une seconde étape, l'acide alimentaire est ajouté et
dans lequel la pectine, le mélange alcool - disaccharide, l'acide alimentaire se présentent sous une forme solide, notamment sous la forme de fines particules, broyée ou pulvérulente.

2. Procédé selon la revendication 1, dans lequel le mélange alcool - disaccharide est un mélange de 1,1-GPM (1-O-α-D-glucopyranosyl-D-mannitol) et de 1,6-GPS (6-O-α-D-glucopyranosyl-D-sorbitol).

3. Procédé selon l'une quelconque des revendications précédentes, dans lequel le mélange alcool - disaccharide est un mélange équimolaire de 1,1-GPM et de 1,6-GPS.

4. Procédé selon l'une quelconque des revendications précédentes, dans lequel le mélange alcool - disaccharide est un mélange de 1,1-GPM et de 1,6-GPS et de 1,1-GPS (1-O-α-D-glucopyranosyl-D-sorbitol).

5. Procédé selon l'une quelconque des revendications précédentes, dans lequel, avant la première étape du procédé, la pectine est mélangée, sous forme chauffée à une température supérieure au point de fusion de la substance d'enrobage, avec une substance d'enrobage.

6. Procédé selon l'une quelconque des revendications 1 à 4, dans lequel après la première et avant la seconde étape du procédé, la pectine et le mélange alcool - disaccharide sont mélangés, sous forme chauffée à une température supérieure au point de fusion de la substance d'enrobage, avec une substance d'enrobage.

7. Procédé selon l'une quelconque des revendications 5 ou 6, dans lequel la substance d'enrobage est une matière hydrophobe ou amphiphile de préférence un mono- ou diglycéride.

8. Procédé selon l'une quelconque des revendications 5 à 7, dans lequel la substance d'enrobage est une matière grasse de plante durcie.

9. Procédé selon l'une quelconque des revendications précédentes, dans lequel, pendant ou après la deuxième étape du procédé, un ou plusieurs autres édulcorants et/ou additifs sont ajoutés.

10. Procédé selon l'une quelconque des revendications précédentes, dans lequel l'édulcorant est le saccharose, le sorbitol, le glucose et/ou le fructose, notamment un mélange de saccharose et de glucose selon un rapport d'au moins 75 parties de saccharose sur un maximum de 25 parties de glucose (% en poids).

11. Procédé selon l'une quelconque des revendications 9 ou 10, dans lequel l'additif est un conservateur.

12. Procédé selon l'une quelconque des revendications précédentes, dans lequel le mélange alcool - disaccharide est ajouté en une quantité allant de 0,5 à 100 % en poids rapportée à la quantité de pectine.

13. Procédé selon l'une quelconque des revendications 5 à 12, dans le quel la substance d'enrobage est ajoutée en une quantité d'au plus 20 % en poids rapportée à la quantité de pectine et, le cas échéant, au mélange alcool - disaccharide présent.

14. Procédé selon l'une quelconque des revendications 5 ou 7 à 13, dans lequel la pectine est mélangée, de préférence pulvérisée avec la substance d'enrobage, en particulier la substance hydrophobe ou amphiphile, le mélange alcool - disaccharide est ensuite ajouté à une température élevée et après refroidissement, les autres composants, notamment l'acide alimentaire et, le cas échéant, l'édulcorant supplémentaire et l'additif, sont mélangés ensemble de sorte que la composition contenant un agent de gélification obtenue aboutisse à un produit stable sans séparation de phase et pouvant être stocké.

15. Procédé selon l'une quelconque des revendications précédentes, dans lequel la pectine est une pectine amidée.

16. Procédé selon l'une quelconque des revendications précédentes, dans lequel l'acide alimentaire est un acide citrique, un acide lactique, un acide tartrique, un acide malique D, un acide malique L, un acide malique DL, un acide ascorbique L, un acide succinique, un acide gluconique, ou une glucono delta lactone.

17. Composition contenant un agent de gélification se présentant sous une forme solide, de petites particules, broyée ou pulvérulente comprenant une pectine, un mélange alcool - disaccharide, une substance d'enrobage et un acide alimentaire, dans laquelle la pectine est au moins partiellement enrobée d'une couche d'enrobage et d'une couche supérieure à base d'un mélange alcool - disaccharide.

18. Composition contenant un agent de gélification se présentant sous une forme solide, de petites particules, broyée ou pulvérulente comprenant une pectine, un mélange alcool - disaccharide et un acide alimentaire, dans laquelle la pectine est au moins partiellement enrobée d'une couche de mélange alcool - disaccharide.

19. Composition contenant un agent de gélification se présentant sous une forme solide, de petites particules, broyée ou pulvérulente comprenant une pectine, un mélange alcool - disaccharide et un acide alimentaire, dans laquelle la pectine et le mélange alcool - disaccharide sont au moins partiellement enrobés d'une couche d'enrobage.

20. Composition contenant un agent de gélification selon l'une quelconque des revendications 17 à 19, contenant un édulcorant supplémentaire, notamment du saccharose, du glucose, du fructose et/ou du sorbitol, de préférence, de 50 à 97 % en poids rapporté au poids total de la composition contenant un agent de gélification et, le cas échéant, des additifs.

21. Pectine stabilisée comprenant un mélange de pectine et un mélange alcool - disaccharide de 1,1-GPM et 1,6-GPS, selon un rapport allant de 99 : 1 à 1 : 99, la pectine se présentant sous une forme solide, notamment sous la forme de fine particules, broyée ou pulvérulente et, la pectine se présentant sous une forme enrobée d'une couche à base du mélange alcool - disaccharide.

22. Pectine stabilisée selon la revendication 21, dans laquelle le rapport en quantité de la pectine sur le mélange de 1,1-GPM et de 1,6-GPS s'élève de 1 : 1 à 100 : 1, de préférence de 2 : 1 à 100 : 1.

23. Procédé de fabrication d'une pectine stabilisée, dans lequel la pectine est mélangée avec un mélange alcool - disaccharide de 1,1-GPM et 1,6-GPS selon un rapport de 99 : 1 à 1 : 99, dans lequel la pectine et le mélange alcool - disaccharide se présentent sous une forme solide, notamment sous la forme de fine particules, broyée ou pulvérulente et la pectine est enrobée au moins partiellement d'un mélange alcool - disaccharide.
